# EUROPEAN PATENT APPLICATION

(11) **EP 4 583 608 A1**
(43) Date of publication of application: **09.07.2025**
(21) Application number: 23859976.5
(22) Date of filing: 07.08.2023
(51) Int. Cl.: H04W 72/0453, H04W 48/10, H04W 72/02, H04W 72/54, H04W 74/08

(54) **USER EQUIPMENT, RADIO ACCESS NETWORK NODE, AND METHOD THEREFOR**

(30) Priority: 01.09.2022 JP 2022139336
(71) Applicant: NEC Corporation, 108-8001 Tokyo (JP)
(72) Inventor: HAYASHI, Satoaki, Tokyo 108-8001 (JP); SASAKI, Takahiro, Tokyo 108-8001 (JP)
(74) Representative: Mathys & Squire
(86) International application number: PCT/JP2023/028666
(87) International publication number: WO 2024/048208

(57) **Abstract**

A radio access network (RAN) node transmits a System Information Block Type 1 (SIB1) containing configuration information for a plurality of initial downlink (DL) bandwidth parts (BWPs) and a plurality of initial uplink (UL) BWPs specific to a particular type of User Equipment (UE). For example, this may help to provide a specific method of notifying a particular type of UE of a plurality of initial DL BWPs and a plurality of initial UL BWPs specific or dedicated to that particular type of UE.

## Description

### Technical Field

The present disclosure relates to radio communication systems, and in particular to signaling between a radio access network node and a user equipment (UE).

### Background Art

3rd Generation Partnership Project (3GPP (registered trademark)) Release 17 supports Reduced Capability (RedCap) UEs (see, for example, section 16.13 of Non-Patent Literature 1). A RedCap UE has reduced capabilities with the intention to have lower complexity with respect to non-RedCap UEs. It is mandatory for a RedCap UE to support 20 MHz maximum UE channel bandwidth in FR1 (i.e., sub-6 GHz band) and 100 MHz in FR2 (i.e., millimeter wave (mmWave) band). On the other hand, functions related to Carrier Aggregation (CA), Multi-Radio Dual Connectivity (MR-DC), Dual Active Protocol Stack (DAPS), and Integrated Access and Backhaul (IAB) are not supported by RedCap UEs.

For example, for RedCap UEs, the minimum number of UE Reception (Rx) branches and the maximum number of Downlink (DL) Multiple Input Multiple Output (MIMO) layers are reduced or relaxed compared to those for non-RedCap UEs. In FR1, one DL MIMO layer is supported if one Rx branch is supported, and two DL MIMO layers are supported if two Rx branches are supported. In FR2, one or two DL MIMO layers can be supported, and two Rx branches are always supported. In FR1 and FR2, the UE functions and corresponding capabilities for more than two UE Rx branches or more than two DL MIMO layers, and the UE functions and capabilities for more than two UE Tx branches or more than two Uplink (UL) MIMO layers are not supported by RedCap UEs.

RedCap UEs in Radio Resource Control (RRC)_IDLE and RRC_INACTIVE monitor paging only in the (default or RedCap-specific) initial DL Bandwidth Part (BWP) associated with the Cell Defining (CD) Synchronization Signal (SS)/Physical Broadcast Channel (PBCH) block (SSB) and perform cell (re)selection and measurements in the CD-SSB. When the RedCap-specific initial UL BWP is configured, RedCap UEs in RRC_IDLE and RRC_INACTIVE need only use the RedCap-specific initial UL BWP to perform random access (Random Access Channel (RACH)).

Non-Patent Literature 2 specifies extensions for RedCap UEs in RRC messages. System Information Block Type 1 (SIB1) includes the initial DL BWP and initial UL BWP configurations for non-RedCap UEs, and may additionally include the initial DL BWP and initial UL BWP configurations specific or dedicated to RedCap UEs.

The RedCap-specific initial UL BWP configurations are specified in the initialUplinkBWP-RedCap-r17 field or information element (IE) in the UplinkConfigCommonSIB within the ServingCellConfigCommonSIB of SIB1. The initialUplinkBWP-RedCap-r17 field or information element (IE) is a BWP-UplinkCommon IE. The BWP-UplinkCommon IE contains a rach-ConfigCommon field or IE. The rach-ConfigCommon field or IE indicates a configuration of cell-specific random access parameters used by UEs, i.e., RedCap UEs, for contention-based and contention-free random access in the BWP.

On the other hand, the RedCap-specific initial DL BWP configurations are specified in the initialDownlinkBWP-RedCap-r17 field or IE in the DownlinkConfigCommonSIB in the ServingCellConfigCommonSIB in SIB1. The initialDownlinkBWP-RedCap-r17 field or IE is a BWP-DownlinkCommon IE. The BWP-DownlinkCommon IE contains a pdcch-ConfigCommon field or IE. The pdcch-ConfigCommon field or IE can specify a Type-1 common search space using a ra-SearchSpace field or IE. Specifically, the pdcch-ConfigCommon field or IE contains a commonSearchSpaceList field or IE that specifies one or more common search spaces (CSSs) within the BWP. The commonSearchSpaceList field or IE is a list of up to four SearchSpace IEs. Each SearchSpace IE specifies a SearchSpaceId and defines the method and location for searching for Physical Downlink Control Channel (PDCCH) candidates.

In other words, the RedCap-specific initial DL BWP can be configured with a Type-1 common search space to receive a PDCCH carrying Downlink Control Information (DCI) for a random access message 2 (MSG2), message B (MSGB), and message 4 (MSG4), i.e., a Physical Downlink Shared Channel (PDSCH). A RedCap UE searches in the Type-1 common search space configured in the RedCap-specific initial DL BWP to receive a DCI/PDCCH indicating a PDSCH carrying MSG2, MSGB, or MSG4, and receives MSG2, MSGB, or MSG4 based on the received DCI.

Section 1 of Non-Patent Literature 3 states that at a previous 3GPP Technical Specification Group Radio Access Network (TSG-RAN) Working Group 1 (WG1) (RAN1) meeting, it was agreed that several options would be further investigated to ensure that a Random Access Channel (RACH) occasion associated with the best SSB falls within the RedCap UE bandwidth. One of these options (i.e., Option 2) is one or more separate initial UL BWPs for RedCap UEs.

Section 2.1 of Non-Patent Literature 3 proposes multiple initial DL BWPs for RedCap UEs (Proposal 2 and Figure 1 of Non-Patent Literature 2). Multiple initial DL BWPs are used for initial access (or random access), specifically for sending Random Access Response (RAR) and paging during initial access. Of these multiple initial DL BWPs, one is the initial DL BWP configured by the Master Information Block (MIB). The others may be "copies" of the initial DL BWP configured by the MIB, and may use, for example, the same Control Resource Set (CORESET) #0, the same PDCCH search space, the same bandwidth, and the same subcarrier spacing. Only the center frequencies of these initial DL BWPs need to be configured. Different RedCap UEs can be placed in different initial DL BWPs for random access and paging reception.

In addition, Section 2.2 of Non-Patent Literature 3 describes multiple initial UL BWPs for RedCap UEs. Specifically, this presents a case where multiple initial UL BWPs are configured in conjunction with a single initial DL BWP (Figure 3 of Non-Patent Literature 3). In this case, it is stated that a RedCap UE determines one of the multiple initial UL BWPs based on the selected random access occasion (RO).

### Citation List

### Non Patent Literature

[Non-Patent Literature 1] 3GPP TS 38.300 V17.1.0 (2022-06), 3rd Generation Partnership Project; Technical Specification Group Radio Access Network; NR; NR and NG-RAN Overall Description; Stage 2 (Release 17), July 2022
[Non-Patent Literature 2] 3GPP TS 38.331 V17.1.0 (2022-06), 3rd Generation Partnership Project; Technical Specification Group Radio Access Network; NR; Radio Resource Control (RRC) protocol specification (Release 17), July 2022
[Non-Patent Literature 3] OPPO, "Discussion on reduced UE bandwidth", R1-2102402, 3GPP TSG-RAN WG1 Meeting #104b-e, April 12-20, 2021

### Summary of Invention

### Technical Problem

Non-Patent Literature 3 does not clearly describe how to configure multiple initial DL BWPs and multiple initial UL BWPs specific or dedicated to RedCap, or in other words, how the network notifies RedCap UEs of them.

One of the objectives to be achieved by the example embodiments disclosed herein is to provide apparatus, methods, and programs that contribute to providing specific methods for notifying a particular type of UE (e.g., RedCap UEs) of multiple initial DL BWPs and multiple initial UL BWPs that are specific to or dedicated to that particular type of UE. It should be noted that this object is only one of the objects to be achieved by the example embodiments disclosed herein. Other objects or problems and novel features will become apparent from the following description and the accompanying drawings.

### Solution to Problem

In a first aspect, a UE includes at least one memory and at least one processor coupled to the at least one memory. The at least one processor is configured to receive a SIB1 containing configuration information for a plurality of initial DL BWPs and a plurality of initial UL BWPs specific to a particular type of UE. The at least one processor is configured to select, from the plurality of initial DL BWPs and the plurality of initial UL BWPs, one initial DL BWP and one initial UL BWP to be used for random access.

In a second aspect, a method performed by a UE includes the steps of:
(a) receiving a SIB1 containing configuration information for a plurality of initial DL BWPs and a plurality of initial UL BWPs specific to a particular type of UE; and
(b) selecting, from the plurality of initial DL BWPs and the plurality of initial UL BWPs, one initial DL BWP and one initial UL BWP to be used for random access.

In a third aspect a first RAN node includes at least one memory and at least one processor coupled to the at least one memory. The at least one processor is configured to transmit a SIB1 containing configuration information for a plurality of initial DL BWPs and a plurality of initial UL BWPs specific to a particular type of UE.

In a fourth aspect, a method performed by a first type RAN node includes transmitting a SIB1 containing configuration information for a plurality of initial DL BWPs and a plurality of initial UL BWPs specific to a particular type of UE.

### Advantageous Effects of Invention

According to the aspects described above, it is possible to provide apparatus, methods, and programs that contribute to providing specific methods for notifying a particular type of UE (e.g., RedCap UEs) of multiple initial DL BWPs and multiple initial UL BWPs that are specific to or dedicated to that particular type of UE.

### Brief Description of Drawings

Fig. 1 shows an example configuration of a radio communication system with respect to one or more example embodiments;
Fig. 2 is a sequence diagram showing an example of signaling between a RAN node and a UE with respect to one or more example embodiments;
Fig. 3 shows an example of the message structure or format of SIB1 with respect to one or more example embodiments;
Fig. 4 is a conceptual diagram explaining BWP transitions with respect to one or more example embodiments;
Fig. 5 is a flowchart showing an example of the operation of a UE with respect to one or more example embodiments;
Fig. 6 is a sequence diagram showing an example of signaling between a RAN node and a UE with respect to one or more example embodiments;
Fig. 7 shows an example of the message structure or format of SIB1 with respect to one or more example embodiments;
Fig. 8 is a block diagram showing an example configuration of a RAN node with respect to one or more example embodiments; and
Fig. 9 is a block diagram showing an example configuration of a UE with respect to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any combination of two or more, as appropriate. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment, but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are described primarily with respect to the 3GPP Long Term Evolution (LTE) system and the 5th generation mobile communication system (5G system). However, these example embodiments can be applied to other radio communication systems supporting technologies similar to the 3GPP systems. The term LTE as used herein includes improvements and enhancements to LTE and LTE-Advanced to enable interworking with 5G systems, unless otherwise specified.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context. As used in this specification, "in response to" may be paraphrased as "based on", depending on the context.

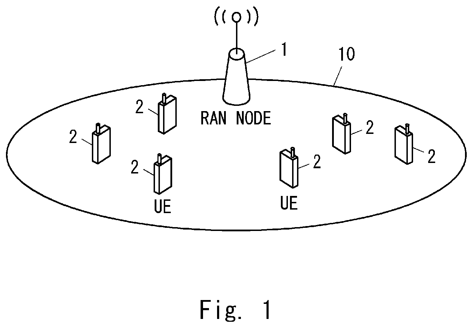

First, the configuration and operation of a plurality of network elements common to a plurality of example embodiments are described. Fig. 1 shows an example configuration of a radio communication system related to a plurality of example embodiments. In the example of Fig. 1, the radio communication system includes a Radio Access Network (RAN) node 1 and one or more UEs 2. Each element (or network function) shown in Fig. 1 may be implemented, for example, as a network element on dedicated hardware, as a software instance running on dedicated hardware, or as a virtualized function instantiated on an application platform.

The RAN node 1 is deployed in a RAN. The RAN node 1 may be an NG-RAN node, specifically a gNB or ng-eNB. An ng-eNB is a node that provides E-UTRA user plane and control plane protocol termination to a UE and is connected to a 5G Core Network (5GC) via NG interfaces. The RAN node 1 may be a combination of a Central Unit (CU) (e.g., gNB-CU or eNB-CU) and one or more Distributed Units (DUs) (e.g., gNB-DUs or eNB-DUs) in a cloud RAN (C-RAN) deployment.

The RAN node 1 serves a cell 10 to multiple types of UEs 2. These multiple types of UEs 2 use the cell 10 as their serving cell and perform Contention Based Random Access (CBRA) in the cell 10. The RAN node 1 may further serve one or more other cells. In this case, the cell 10 may be a primary cell (PCell) in Carrier Aggregation (CA), and one or more other cells may be secondary cells (SCells). That is, the cell 10 is a cell in which UEs 2 in RRC_IDLE initiate an RRC connection establishment procedure. UEs 2 in RRC_INACTIVE may initiate an RRC connection resume procedure in the cell 10. UEs 2 in RRC_CONNECTED may initiate an RRC connection re-establishment procedure in the cell 10.

The RAN node 1 broadcasts the Minimum SI (i.e., MIB and SIB1) in the cell 10. The RAN node 1 may also transmit other SI. The Other SI contains all SIBs that are not always broadcast within the Minimum SI. These SIBs are broadcast periodically on a DL Shared Channel (DL-SCH), broadcast on demand on a DL-SCH (i.e., upon request from UEs in RRC_IDLE or RRC_INACTIVE), or sent in a dedicated manner on a DL_SCH to UEs in RRC_CONNECTED.

The UEs 2 may be referred to by other names such as radio terminals, mobile terminals, mobile stations, or wireless transmit receive units (WTRUs). The UEs 2 may be implemented in machines, vehicles, or devices. By way of example, but not limitation, the UEs 2 may be implemented in machines, vehicles, or devices with mobility, and in particular in automated guided vehicles (AGVs), mobile robots, construction machines, or unmanned or uncrewed aerial vehicles (UAVs).

Each UE 2 performs cell selection or cell reselection when it is in RRC_IDLE or RRC_INACTIVE. In addition, each UE 2 may perform RRC connection re-establishment when it is in RRC_CONNECTED state. Each UE 2 receives MIB and SIB1 in the cell 10 and configures the initial DL BWP and initial UL BWP based on cell-specific common parameters for the initial DL BWP and initial UL BWP in the cell 10 contained in SIB1. Each UE 2 then uses the Initial DL BWP and Initial UL BWP to perform a random access procedure in the cell 10 and initiate an RRC connection establishment, resume, or re-establishment procedure.

The UEs 2 are divided into first type and second type. Second type UEs are UEs with limited capabilities compared to first type UEs. The second type of UE may have limited RF capability compared to the first type of UE. The second type of UE may be a RedCap UE. In contrast, the first type of UE may be referred to as a normal UE or a non-RedCap UE. In the following description, the second type of UE is considered to be a RedCap UE and the first type of UE is considered to be a Normal UE or a Non-RedCap UE.

As described previously, a RedCap UE has reduced capabilities with the intention to have lower complexity with respect to non-RedCap UEs. In the current 3GPP specification, it is mandatory for a RedCap UE to support 20 MHz maximum UE channel bandwidth in FR1 (i.e., sub-6 GHz band) and 100 MHz in FR2 (i.e., millimeter wave (mmWave) band). On the other hand, functions related to CA, MR-DC, DAPS, and IAB are not supported by RedCap UEs.

For example, for RedCap UEs, the minimum number of UE Rx branches and the maximum number of DL MIMO layers are reduced or relaxed compared to those for non-RedCap UEs. In FR1, one DL MIMO layer is supported if one Rx branch is supported, and two DL MIMO layers are supported if two Rx branches are supported. In FR2, one or two DL MIMO layers can be supported, and two Rx branches are always supported. In FR1 and FR2, the UE functions and corresponding capabilities for more than two UE Rx branches or more than two DL MIMO layers, and the UE functions and capabilities for more than two UE Tx branches or more than two UL MIMO layers are not supported by RedCap UEs. RedCap UEs may support time division duplex (TDD) or half-duplex frequency division duplex (HD-FDD). For HD-FDD, RedCap UEs can share an antenna and radio frequency (RF) components for uplink transmission and downlink reception.

RedCap UEs in RRC_IDLE and RRC_INACTIVE monitor paging only in the (default or RedCap-specific) initial DL BWP associated with the CD-SSB and perform cell (re)selection and measurements in the CD-SSB. If the initial UL BWP is configured for RedCap, RedCap-specific, or RedCap-dedicated, RedCap UEs in RRC_IDLE and RRC_INACTIVE use only the RedCap-specific initial UL BWP to perform random access (or RACH).

The initial DL BWP for RedCap, specific to RedCap, or dedicated to RedCap, can be configured with a Type-1 common search space to receive a PDCCH carrying a DCI for a random access MSG2, MSGB, and MSG4, i.e., a PDSCH. This DCI is a DCI format with Cyclic Redundancy Check (CRC) bits scrambled with a Random Access Radio Network Temporary Identifier (RA-RNTI). A RedCap UE searches in the Type-1 common search space configured in the initial DL BWP for RedCap to receive a DCI/PDCCH indicating a PDSCH carrying MSG2, MSGB, or MSG4, and receives MSG2, MSGB, or MSG4 based on the received DCI.

The initial DL BWP for RedCap, specific to RedCap, or dedicated to RedCap may be configured with a search space for paging. However, if the initial DL BWP for RedCap does not contain the CD-SSB and the entire CORESET#0, no search space for paging is configured in the initial DL BWP for RedCap. If the initial DL BWP for RedCap is not configured with a search space for paging, RedCap UEs will not receive paging in that DL BWP. In this case, RedCap UEs may receive paging in the initial DL BWP used by normal UEs or non-RedCap UEs, i.e., the non-RedCap-specific initial DL BWP.

The RAN node 1 transmits a first initial BWP configuration and a second initial BWP configuration in SIB1. The first initial BWP configuration contains common or cell-specific parameters for a first initial BWP in the cell 10. The first initial BWP includes an initial DL BWP and an initial UL BWP. The first initial DL BWP and UL BWP are used by the first type of UEs, i.e., normal UEs or non-RedCap UEs, that use the cell 10 as a serving cell. The first initial DL BWP and UL BWP are used by normal UEs or non-RedCap UEs when accessing the cell 10 to transition from RRC_IDLE or RRC_INACTIVE to RRC_CONNECTED. The first initial DL BWP can be used by normal UEs or non-RedCap UEs to receive paging. In other words, the first initial DL BWP can be configured with a search space to receive a DCI format with CRC bits scrambled with a Paging RNTI (P-RNTI). As described above, the first initial DL BWP can be used by RedCap UEs to receive paging. In other words, RedCap UEs may receive paging in the first initial DL BWP used by normal UEs or non-RedCap UEs, or in the search space for paging within the first initial DL BWP.

The second initial BWP configuration contains cell-specific common parameters for a second initial BWP in the cell 10. The second initial BWP includes an initial DL BWP and an initial UL BWP. The second initial DL BWP and UL BWP are used by the second type of UEs, i.e., RedCap UEs, that use the cell 10 as a serving cell. The second initial DL BWP and UL BWP are used by RedCap UEs when accessing the cell 10 to transition from RRC_IDLE or RRC_INACTIVE to RRC_CONNECTED. In other words, the second initial DL BWP and UL BWP are the initial DL BWP and UL BWP for RedCap or specific to RedCap.

In some implementations, the RAN node 1 may configure a plurality of second initial DL BWPs and a plurality of second initial UL BWPs in the cell 10. In other words, the RAN node 1 may configure a plurality of initial DL BWPs and a plurality of initial UL BWPs in the cell 10 that are specific or dedicated to RedCap UEs. The following example embodiments provide details on how to configure a plurality of initial DL BWPs and a plurality of initial UL BWPs specific to RedCap UEs and how they are used by RedCap UEs.

### First Example Embodiment

An example configuration of a radio communication system according to this example embodiment may be the same as the example shown in Fig. 1. This example embodiment provides improved signaling between the RAN node 1 and UEs 2.

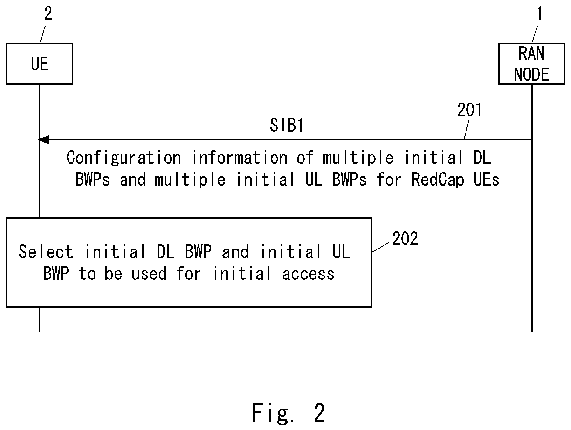

Fig. 2 shows an example of signaling between the RAN node 1 and a UE 2. In step 201, the RAN node 1 transmits SIB1 to the UE 2. In other words, the RAN node 1 broadcasts SIB1 in the cell 10 and the UE 2 receives the SIB1. The SIB1 contains configuration information for a plurality of (second) initial DL BWPs and a plurality of (second) initial UL BWPs that are specific or dedicated to RedCap UEs. The SIB1 further contains configurations of a (first) initial DL BWP and a (first) initial UL BWP used by normal UEs or non-RedCap UEs.

In step 202, if the UE 2 is a RedCap UE, the UE 2 selects an initial DL BWP and an initial UL BWP to be used for random or initial access to the cell 10, from the plurality of initial DL BWPs and the plurality of initial UL BWPs that are specific or dedicated to RedCap. The UE 2 transmits a Physical PRACH (PRACH) and a Physical Uplink Shared Channel (PUSCH) for random access in the selected initial UL BWP. In other words, the UE 2 transmits a random access preamble (MSG1, MSGA) and a PUSCH (MSGA, MSG3) in the selected initial UL BWP. In addition, the UE 2 receives a PDCCH and a PDSCH, i.e., RAR (MSG2) and Contention Resolution (MSG4, MSGB), for random access in the selected initial DL BWP.

According to the operation described with reference to Fig. 2, the RAN node 1 can provide configuration information of a plurality of initial DL BWPs and a plurality of initial UL BWPs that are specific or dedicated to RedCap to UEs 2 in the cell 10 via SIB 1, i.e., via broadcast.

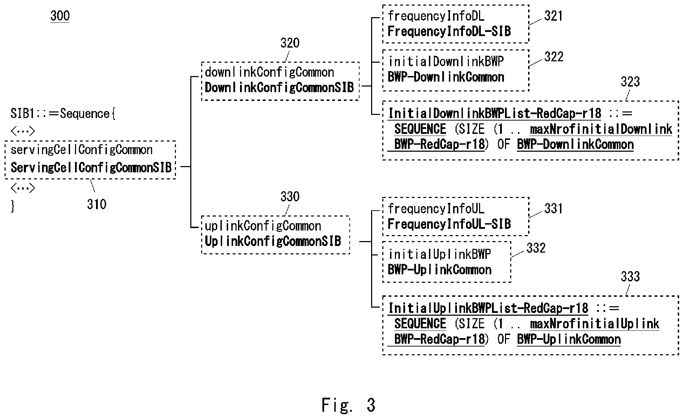

Fig. 3 shows an example of the message structure or format of the SIB1. SIB1 300 includes a servingCellConfigCommon field, i.e., ServingCellConfigCommonSIB IE 310. The ServingCellConfigCommonSIB IE 310 includes a downlinkConfigCommon field, i.e., DownlinkConfigCommonSIB IE 320, and an uplinkConfigCommon field, i.e., UplinkConfigCommonSIB IE 330. The DownlinkConfigCommonSIB IE 320 includes a frequencyInfoDL field, i.e., FrequencyInfoDL-SIB IE 321, an initialDownlinkBWP field, i.e., BWP-DownlinkCommon IE 322, and an InitialDownlinkBWPList-RedCap field 323.

The FrequencyInfoDL-SIB IE 321 provides basic parameters about a downlink carrier and the transmission on it. The FrequencyInfoDL-SIB IE 321 specifies one or more frequency bands (specifically, one or more NR frequency band numbers) to which the downlink carrier belongs.

The BWP-DownlinkCommon IE 322 is used to configure common parameters of the (first) initial DL BWP used by normal UEs or non-RedCap UEs. These parameters are "cell specific". The BWP-DownlinkCommon IE 322 includes a pdcch-ConfigCommon field or IE. The pdcch-ConfigCommon field or IE can specify a Type-1 common search space using a ra-SearchSpace field or IE. Specifically, this field or IE contains a commonSearchSpaceList field or IE that specifies one or more common search spaces (CSSs) within the BWP. The commonSearchSpaceList field or IE is a list of up to four SearchSpace IEs. Each SearchSpace IE specifies a SearchSpaceId and defines the method and location for searching for Physical Downlink Control Channel (PDCCH) candidates.

The InitialDownlinkBWPList-RedCap field 323 is used to configure common parameters of one or more initial DL BWPs specific or dedicated to RedCap UEs. These parameters are "cell specific". The InitialDownlinkBWPList-RedCap field 323 is a list of one or more BWP-DownlinkCommon IEs. The maximum number of initial DL BWPs for RedCap that can be configured in the cell 10 (maxNrofinitialDownlinkBWP-RedCap) may be specified in the 3GPP specification. Similar to the BWP-DownlinkCommon IE 322 described above, each BWP-DownlinkCommon IE contains a pdcch-ConfigCommon field or IE.

On the other hand, the UplinkConfigCommonSIB IE 330 includes a frequencyInfoUL field, i.e., FrequencyInfoUL-SIB IE 331, an initialUplinkBWP field, i.e., BWP-UplinkCommon IE 332, and an InitialUplinkBWPList-RedCap field 333.

The FrequencyInfoUL-SIB IE 331 provides basic parameters about an uplink carrier and the transmission on it. The FrequencyInfoUL-SIB IE 331 specifies one or more frequency bands (specifically, one or more NR frequency band numbers) to which the uplink carrier belongs.

The BWP-UplinkCommon IE 332 is used to configure common parameters of the (first) initial UL BWP used by normal UEs or non-RedCap UEs. These parameters are "cell specific". The BWP-UplinkCommon IE 332 includes a rach-ConfigCommon field or IE. The rach-ConfigCommon field or IE indicates a configuration of cell-specific random access parameters to be used by UEs for contention-based or contention-free random access in the BWP.

The InitialUplinkBWPList-RedCap field 333 is used to configure common parameters of one or more initial UL BWPs specific or dedicated to RedCap UEs. These parameters are "cell specific". The InitialUplinkBWPList-RedCap field 333 is a list of one or more BWP-UplinkCommon IEs. The maximum number of initial UL BWPs for RedCap that can be configured in the cell 10 (maxNrofinitialUplinkBWP-RedCap) may be specified in the 3GPP specification. Similar to the BWP-UplinkCommon IE 332 described above, each BWP-UplinkCommon IE contains a rach-ConfigCommon field or IE. The rach-ConfigCommon field or IE indicates a configuration of cell-specific random access parameters to be used by UEs, i.e., RedCap UEs, for contention-based or contention-free random access in the BWP.

That is, in the example in Fig. 3, the SIB1 300 contains configuration information (BWP-DownlinkCommon IE 322) of the (first) Initial DL BWP used by normal UEs or non-RedCap UEs, and also contains configuration information (InitialDownlinkBWPList-RedCap field 323) of the one or more (second) Initial DL BWPs for RedCap. Similarly, the SIB1 300 contains configuration information (BWP-UplinkCommon IE 332) of the (first) Initial UL BWP used by normal UEs or non-RedCap UEs, and also contains configuration information (InitialUplinkBWPList-RedCap field 333) of the one or more (second) Initial UL BWPs for RedCap.

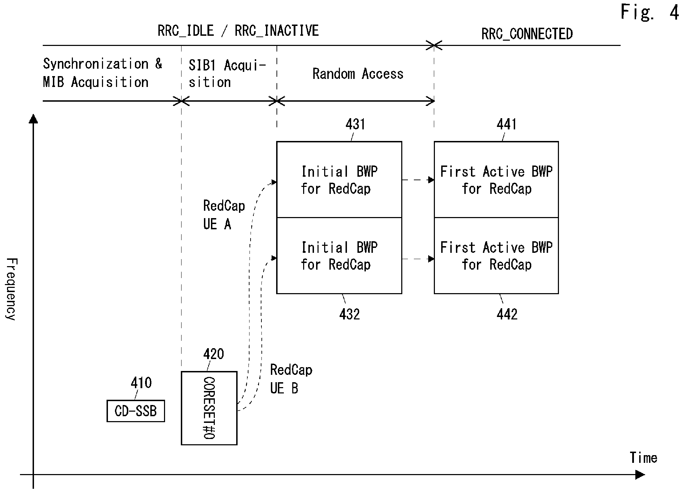

Fig. 4 is a conceptual diagram illustrating BWP transitions or switching for RedCap UEs. In the example in Fig. 4, two RedCap-specific initial BWPs 431 and 432 are configured in the cell 10. Fig. 4 assumes that the cell 10 is operating in a TDD band. Accordingly, the RedCap-specific initial BWP 431 includes a pair of an initial DL BWP and an initial UL BWP with the same center frequency. In the RedCap-specific initial BWP 431, the bandwidth of the initial DL BWP may be the same as or different from the bandwidth of the initial UL BWP. Similarly, the RedCap-specific initial BWP 432 includes a pair of an initial DL BWP and an initial UL BWP with the same center frequency. In the RedCap-specific initial BWP 432, the bandwidth of the initial DL BWP may be the same as or different from the bandwidth of the initial UL BWP.

RedCap UEs in RRC_IDLE or RRC_INACTIVE decode the MIB in a CD-SSB 410 and obtain a configuration of a CORESET#0 420 from the MIB. The RedCap UEs then perform blind decoding to find a DCI/PDCCH for SIB1 reception in the CORESET#0 420. If the blind decoding is successful, the RedCap UEs receive a PDSCH carrying the SIB1. The RedCap UEs then obtain a configuration of the two RedCap-specific initial BWPs 431 and 432 from the SIB1.

The RedCap UEs then select one of the two RedCap-specific initial BWPs 431 and 432. Some RedCap UEs (e.g., RedCap UE A) select the initial BWP 431, while other RedCap UEs (e.g., RedCap UE A) select the initial BWP 432. The RedCap UEs re-tune their respective RF components to the center frequency of the selected initial BWP and perform random or initial access to the cell 10 at the selected initial BWP.

If the random access is successful, each RedCap UE receives an RRC message (e.g., RRC Setup or RRC Resume) from the RAN node 1 indicating a UE dedicated BWP configuration. The UE dedicated BWP configuration includes a configuration of a first active BWP (first active DL BWP and first active UL BWP). The first active BWP is a BWP that the UE shall use from the time when (or immediately after) the RRC connection establishment is completed in the serving cell. Each RedCap UE applies the UE dedicated BWP configuration and transitions to RRC_CONNECTED at the configured first active BWP.

In the example in Fig. 4, a RedCap UE with a successful random access in the initial BWP 431 uses a first active BWP 441, while a RedCap UE with a successful random access in the initial BWP 432 uses a first active BWP 442. In the example in Fig. 4, the first active BWP 441 has the same center frequency and bandwidth as the initial BWP 431, and similarly, the first active BWP 442 has the same center frequency and bandwidth as the initial BWP 432. This allows a RedCap UEs to continue to use the initial BWP as the first active BWP without re-tuning its RF components. However, this is only an example. One or both of the center frequency and bandwidth of the first active BWP 441 may be different from those of the initial BWP 431. Similarly, one or both of the center frequency and bandwidth of the first active BWP 442 may be different from those of the initial BWP 432.

In addition, the BWP configuration shown in Fig. 4 can be modified as follows. The RedCap UE specific initial BWPs 431 and 432 may have different bandwidths from each other. One of the RedCap UE specific initial BWPs 431 and 432 may be configured to contain the CD-SSB 410 and the CORESET#0 420.

### Second Example Embodiment

An example configuration of a radio communication system according to this example embodiment may be the same as the example shown in Fig. 1. This example embodiment provides various specific examples of initial BWP selection by RedCap UEs. The initial BWP selection as described in this example embodiment may be applied to the first example embodiment, specifically to step 202 in Fig. 2.

If a UE 2 is a RedCap UE, the UE 2 may select one initial DL BWP and one initial UL BWP to be used for random access from a plurality of initial DL BWPs and a plurality of initial UL BWPs that are specific to RedCap UEs as follows. In other words, the UE 2 may select a pair from a plurality of pairs of initial DL and DL BWPs as follows.

In the first example, the UE 2 may randomly select the one initial DL BWP and the one initial UL BWP.

In the second example, the UE 2 may select the one initial DL BWP and the one initial UL BWP based on a UE identifier of the UE 2. By way of example, but not limitation, the UE identifier may be part or all of, for example, a Subscription Permanent Identifier (SUPI).

In the third example, the UE 2 may select the one initial DL BWP and the one initial UL BWP based on a group identifier assigned by a core network (e.g., 5GC). By way of example, but not limitation, the group identifier assigned by the core network may be a Paging Subgroup ID assigned by an Access and Mobility Management Function (AMF).

In the fourth example, the UE 2 may select the one initial DL BWP and the one initial UL BWP based on a measured value of received power or received quality of a downlink signal. The received power measurement value may be a measured value of Reference Signal Received Power (RSRP) of a resource within the CD-SSB. The received quality measurement value may be a measured value of Reference Signal Received Quality (RSRQ) of a resource within the CD-SSB.

More specifically, if the measured value is equal to or exceeds a first threshold value, the UE 2 may select the initial DL BWP and the initial UL BWP (e.g., initial BWP 432 in Fig. 4) that are closest to the CD-SSB (e.g., CD-SSB 410 in Fig. 4) in the frequency domain to use for random access. If the measured value equals or exceeds the first threshold value, it means that the reception quality of the CD-SSB is relatively good. Accordingly, it can be expected that better communication quality can be achieved in random access between the RAN node 1 and the UE 2 by selecting the initial DL BWP and the initial UL BWP whose frequency location is closer to the CD-SSB. On the other hand, if the measured value is below a second threshold value equal to or lower than the first threshold value, the UE 2 may select the initial DL BWP and the initial UL BWP (e.g., initial BWP 431 in Fig. 4) that are farthest from the CD-SSB (e.g., CD-SSB 410 in Fig. 4) in the frequency domain to use for random access. If the measured value is below the second threshold value, it means that the reception quality of the CD-SSB is relatively poor. Accordingly, by selecting initial DL and initial UL BWPs whose frequency locations are farther from the CD-SSB, it is expected that the communication quality at the selected initial DL and initial UL BWPs will be better than at other pairs closer to the NCD-SSB.

The second threshold value can be configured to be lower than the first threshold value. In this case, if the measured value is between the first threshold value and the second threshold value, the UE 2 may randomly select the initial DL BWP and the initial UL BWP to be used for random access. The first threshold value or the first and second threshold values may be broadcast in the cell 10 by the network (e.g., RAN node 1). The first threshold value or the first and second threshold values may be included in SIB1.

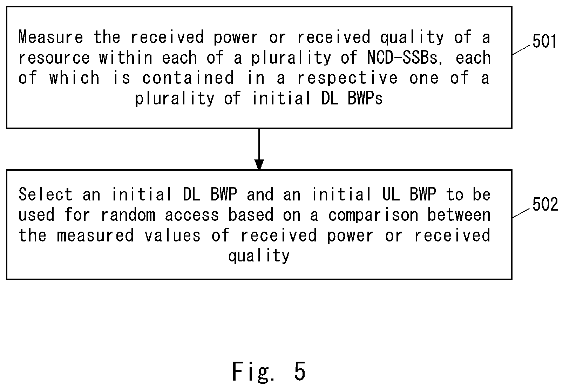

In the fifth example, the UE 2 uses the received power or received quality of a resource within each of a plurality of Non-Cell Defining (NCD) SSBs, each of which is contained in a respective one of the plurality of initial DL BWPs. Fig. 5 shows an example of the operation of the UE 2 in the fifth example. In step 501, the UE 2 measures the received power or received quality of a resource within each of a plurality of NCD-SSBs, each of which is contained in a respective one of the plurality of initial DL BWPs. In step 502, the UE 2 selects the initial DL BWP and the initial UL BWP to be used for random access based on a comparison between the measured values of received power or received quality.

NCD-SSBs are not associated with RMSIs (or SIB1). Downlink signals that are available for downlink power or quality measurements, such as a PBCH demodulation reference signal (DMRS), are transmitted in the resources within the NCD-SSBs.

For example, the UE 2 may select a pair of an initial DL BWP having the best measured values of received power or received quality of a resource within the NCD-SSB and its corresponding initial UL BWP, and use them for random access. This is expected to improve the communication quality in random access between the RAN node 1 and the UE 2.

Alternatively, the UE 2 may select any pair of an initial DL BWP for which the received power or received quality measured value of a resource within the NCD-SSB exceeds the threshold value, and its corresponding initial UL BWP. If multiple pairs of BWPs exceed the threshold, the UE 2 may select any of these multiple pairs of BWPs. Such a selection operation can also help to improve the communication quality of random access between the RAN node 1 and the UE 2.

In the fifth example, the UE 2 needs to obtain configuration information for the NCD-SSBs contained in the RedCap-specific initial DL BWPs. The RAN node 1 may provide the NCD-SSB configuration information to the UE 2 via SIB1. In other words, SIB1 may contain the configuration information for the NCD-SSBs contained in the RedCap-specific initial DL BWPs.

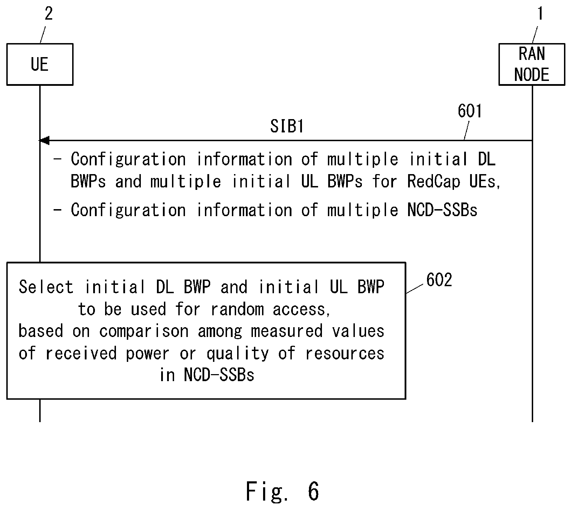

Fig. 6 shows an example of signaling between the RAN node 1 and the UE 2 with respect to the fifth example. In step 601, the RAN node 1 transmits SIB1 to UE 2. In other words, the RAN node 1 broadcasts SIB1 in the cell 10, and the UE 2 receives the SIB1. The SIB1 contains configuration information for a plurality of (second) initial DL BWPs and a plurality of (second) initial UL BWPs that are specific or dedicated to RedCap UEs. The SIB1 also contains configuration information for a plurality of NCD-SSBs, each of which is contained in a respective one of the RedCap-specific initial DL BWPs.

In step 602, the UE2 compares measured values of received power or quality on resources within the NCD-SSBs. Based on this comparison, the UE2 then selects an initial DL BWP and an initial UL BWP to be used for random access (or initial access).

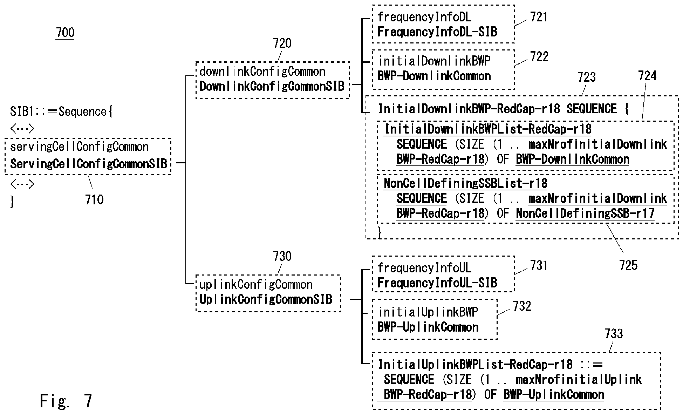

Fig. 7 shows an example of the message structure or format of SIB1 sent in step 601. SIB1 700 has the same basic structure as the SIB1 300 shown in Fig. 3. Specifically, the fields or IEs 710, 720, 721, 722, 723, 730, 731, 732, and 733 shown in Fig. 7 correspond to or are similar to the fields or IEs 310, 320, 321, 322, 323, 330, 331, 332, and 333 shown in Fig. 3, respectively.

However, the InitialDownlinkBWP-RedCap field 723 includes an InitialDownlinkBWPList-RedCap field 724 that is similar to the InitialDownlinkBWPList-RedCap field 323 in Fig. 3. In addition, the InitialDownlinkBWP-RedCap field 723 includes a NonCellDefiningSSBList field 725.

The NonCellDefiningSSBList field 725 is used to configure common parameters of one or more initial DL BWPs that are specific or dedicated to RedCap UEs. These parameters are "cell specific". The NonCellDefiningSSBList field 725 is a list of one or more NonCellDefiningSSB IEs. The maximum number of initial DL BWPs for RedCap that can be configured in the cell 10 (maxNrofinitialDownlinkBWP-RedCap) may be specified in the 3GPP specification. The NonCellDefiningSSB IE indicates a configuration of one or more NCD-SSBs contained in the one or more RedCap-specific initial DL BWPs specified in the InitialDownlinkBWPList-RedCap field 323.

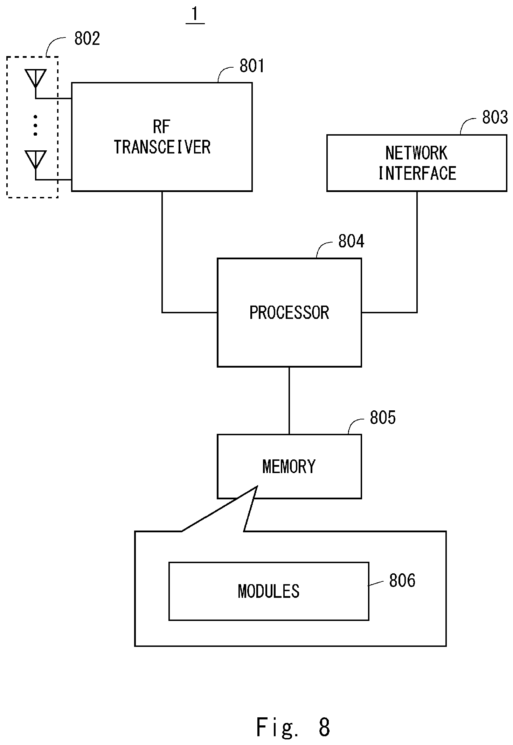

The following describes example configurations of the RAN node 1 and the UE 2 according to the above example embodiments. Fig. 8 is a block diagram showing an example configuration of the RAN node 1 according to the above example embodiments.

Referring to Fig. 8, the RAN node 1 includes a radio frequency (RF) transceiver 801, a network interface 803, a processor 804, and a memory 805. The RF transceiver 801 performs analog RF signal processing to communicate with UEs. The RF transceiver 801 may include a plurality of transceivers. The RF transceiver 801 is coupled to an antenna array 802 and the processor 804. The RF transceiver 801 receives modulated symbol data from the processor 804, generates a transmit RF signal, and supplies the transmit RF signal to the antenna array 802. In addition, the RF transceiver 801 generates a baseband receive signal based on a received RF signal received by the antenna array 802 and provides it to the processor 804. The RF transceiver 801 may include analog beamformer circuitry for beamforming. For example, the analog beamformer circuitry includes a plurality of phase shifters and a plurality of power amplifiers.

The network interface 803 is used to communicate with network nodes (e.g., other RAN nodes, and control plane and user plane nodes in the core network). For example, the network interface 803 may include an IEEE 802.3 series compliant network interface card (NIC).

The processor 804 performs digital baseband signal processing (data-plane processing) and control-plane processing for wireless communication. The processor 804 may include a plurality of processors. For example, the processor 804 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing.

For example, the digital baseband signal processing by the processor 804 may include signal processing of the Service Data Adaptation Protocol (SDAP) layer, Packet Data Convergence Protocol (PDCP) layer, Radio Link Control (RLC) layer, Medium Access Control (MAC) layer, and Physical (PHY) layer. Meanwhile, the control plane processing by the processor 804 may include processing of Non-Access Stratum (NAS) messages, RRC messages, Medium Access Control (MAC) Control Elements (CEs), and Downlink Control Information (DCI). The control plane processing by the processor 804 may further include processing of application layer signaling protocols such as XnAP, F1AP, NGAP, etc.

The processor 804 may include a digital beamformer module for beamforming. The digital beamformer module may include a Multiple Input Multiple Output (MIMO) encoder and precoder.

The memory 805 consists of a combination of volatile and non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 805 may include storage remote from the processor 804. In this case, the processor 804 may access the memory 805 through the network interface 803 or any I/O interface.

The memory 805 may store one or more software modules (computer programs) 806 containing a set of instructions and data for processing by the RAN node 1 described in the example embodiments described above. In some implementations, the processor 804 may be configured to read and execute the software module(s) 806 from the memory 805, thereby performing the processing of the RAN node 1 described in the example embodiments described above.

If the RAN node 1 is a Central Unit (CU) (e.g., eNB-CU or gNB-CU) or a CU-CP, the RAN node 1 does not necessarily include the RF transceiver 801 (and the antenna array 802).

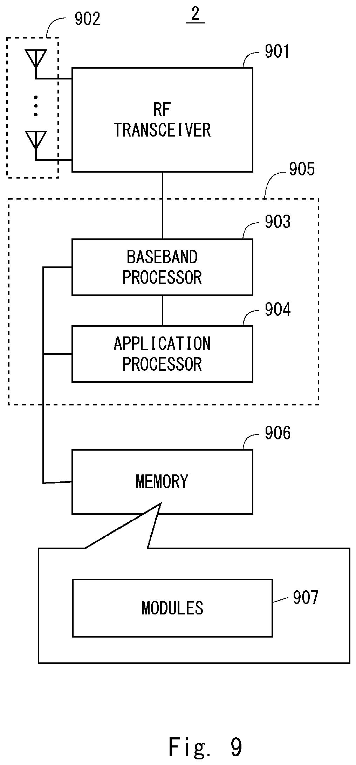

Fig. 9 shows a block diagram of an example configuration of the UE 2. 901 The RF transceiver performs analog RF signal processing to communicate with the RAN node 2. The RF transceiver 901 may include a plurality of transceivers. The analog RF signal processing performed by the RF transceiver 901 includes frequency up-conversion, frequency down-conversion, and amplification. The RF transceiver 901 is coupled to an antenna array 902 and a baseband processor 903. The RF transceiver 901 receives modulated symbol data (or OFDM symbol data) from the baseband processor 903, generates a transmit RF signal, and provides the transmit RF signal to the antenna array 902. In addition, the RF transceiver 901 generates a baseband received signal based on a received RF signal received by the antenna array 902, and provides it to the baseband processor 903. The RF transceiver 901 may include analog beamformer circuitry for beamforming. For example, the analog beamformer circuitry includes a plurality of phase shifters and a plurality of power amplifiers.

The baseband processor 903 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). Meanwhile, the control-plane processing includes communication management of layer 1 (e.g., transmission power control), layer 2 (e.g., radio resource management, and hybrid automatic repeat request (HARQ) processing), and layer 3 (e.g., signaling regarding attach, mobility, and call management).

For example, the digital baseband signal processing by the baseband processor 903 may include signal processing of the SDAP layer, PDCP layer, RLC layer, MAC layer, and PHY layer. Meanwhile, the Control plane processing by the baseband processor 903 may include processing of Non-Access Stratum (NAS) protocols, RRC protocols, MAC CEs, and DCIs.

The baseband processor 903 may perform MIMO encoding and precoding for beamforming.

The baseband processor 903 may include a modem processor (e.g., DSP) for digital baseband signal processing and a protocol stack processor (e.g., CPU or MPU) for control-plane processing. In this case, the protocol stack processor performing control plane processing may be integrated with an application processor 904 described below.

The application processor 904 may also be referred to as a CPU, an MPU, a microprocessor, or a processor core. The application processor 904 may include a plurality of processors (processor cores). The application processor 904 executes a system software program (operating system (OS)) and various application programs (e.g., call application, web browser, mailer, camera control application, music player application) read from the memory 906 or a memory not shown in the figure, thereby providing various functions of the UE 2.

In some implementations, as represented by the dashed line (905) in Fig. 9, the baseband processor 903 and the application processor 904 may be integrated on a single chip. In other words, the baseband processor 903 and the application processor 904 may be implemented in a single System on Chip (SoC) device 905. A SoC device may be referred to as a system Large Scale Integration (LSI) or a chipset.

The memory 906 is a volatile memory or a non-volatile memory, or a combination thereof. The memory 906 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 906 may include, for example, an external memory device that can be accessed by the baseband processor 903, the application processor 904, or the SoC 905. The memory 906 may include an internal memory device that is integrated into the baseband processor 903, the application processor 904, or the SoC 905. Further, the memory 906 may include a memory in a Universal Integrated Circuit Card (UICC).

The memory 906 may store one or more software modules (computer programs) 907 including instructions and data for processing by the UE 2 described in the above example embodiments. In some implementations, the baseband processor 903 or the application processor 904 may read and execute the software module(s) 907 from the memory 906, thereby performing the processing of the UE 2 described in the above example embodiments with reference to the drawings.

The control-plane processing and operations performed by the UE 2 described in the above example embodiments can be achieved by elements other than the RF transceiver 901 and the antenna array 902, i.e., achieved by the memory 906, which stores the software module(s) 907, and one or both of the baseband processor 903 and the application processor 904.

As described using Figs. 8 and 9, each of the processors of the RAN node 1 and the UE 2 in the example embodiments described above can execute one or more programs, including a set of instructions, to cause a computer to perform an algorithm described with reference to the drawings. Each of these programs contains a set of instructions (or software code) that, when loaded into a computer, causes the computer to perform one or more of the functions described in the example embodiments. Each of these programs may be stored in a non-transitory computer readable medium or a tangible storage medium. By way of example, but not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

The example embodiments described above are merely examples of applications of the technical ideas of the inventors. These technical ideas are not limited to the above-described example embodiments, and various modifications may be made thereto.

For example, the whole or part of the example embodiments disclosed above can be described as, but not limited to, the following Supplementary Notes. Of course, some or all of the elements (e.g., configurations and functionalities) described in the Supplementary Notes directed to apparatus (e.g., UE and RAN nodes) may also be described as supplementary notes directed to methods and programs. For example, some or all of the elements described in Supplementary Notes 2-14 that depend on Supplementary Note 1, may also be written as Supplementary Notes that depend on Supplementary Notes 15 and 16 with the same dependency relationship as Supplementary Notes 2-14. Some or all of the elements described in each Supplementary Note may be applicable to various hardware, software, storage for storing software, systems, and methods.

### (Supplementary Note 1)

A User Equipment (UE) comprising:
at least one memory; and
at least one processor coupled to the at least one memory and configured to:
   receive a System Information Block Type 1 (SIB1) containing configuration information for a plurality of initial downlink (DL) bandwidth parts (BWPs) and a plurality of initial uplink (UL) BWPs specific to a particular type of UE; and
   select, from the plurality of initial DL BWPs and the plurality of initial UL BWPs, one initial DL BWP and one initial UL BWP to be used for random access.

### (Supplementary Note 2)

The UE according to Supplementary Note 1, wherein the at least one processor is configured to randomly select the one initial DL BWP and the one initial UL BWP.

### (Supplementary Note 3)

The UE according to Supplementary Note 1, wherein the at least one processor is configured to select the one initial DL BWP and the one initial UL BWP based on a UE identifier.

### (Supplementary Note 4)

The UE according to Supplementary Note 1, wherein the at least one processor is configured to select the one initial DL BWP and the one initial UL BWP based on a group identifier assigned by a core network.

### (Supplementary Note 5)

The UE according to Supplementary Note 4, wherein the group identifier is a Paging Subgroup ID.

### (Supplementary Note 6)

The UE according to Supplementary Note 1, wherein the at least one processor is configured to select the one initial DL BWP and the one initial UL BWP based on a measured value of received power or received quality of a downlink signal.

### (Supplementary Note 7)

The UE according to Supplementary Note 6, wherein
the measured value of the received power is a measured value of Reference Signal Received Power (RSRP) of a resource within a Cell Defining (CD) Synchronization Signal (SS)/Physical Broadcast Channel (PBCH) block (SSB), and
the measured value of the received quality is a measured value of Reference Signal Received Quality (RSRQ) of a resource within the CD-SSB.

### (Supplementary Note 8)

The UE according to Supplementary Note 7, wherein the at least one processor is configured to:
if the measured value exceeds a first threshold value, select as the one initial DL BWP and the one initial UL BWP an initial DL BWP and an initial UL BWP that are closest to the CD-SSB in frequency domain, and
if the measured value is lower than a second threshold value that is equal to or lower than the first threshold value, select as the one initial DL BWP and the one initial UL BWP an initial DL BWP and an initial UL BWP that are furthest from the CD-SSB in frequency domain.

### (Supplementary Note 9)

The UE according to Supplementary Note 8, wherein
the second threshold value is lower than the first threshold value, and
the at least one processor is configured to randomly select the one initial DL BWP and the one initial UL BWP if the measured value is between the first threshold value and the second threshold value.

### (Supplementary Note 10)

The UE according to Supplementary Note 1, wherein the at least one processor is configured to:
measure received power or received quality on a resource within each of a plurality of Non-Cell Defining (NCD) Synchronization Signal (SS)/Physical Broadcast Channel (PBCH) blocks (SSBs), each of which is contained in a respective one of the plurality of initial DL BWPs; and
selecting the one initial DL BWP and the one initial UL BWP based on a comparison between the measured values of received power or received quality.

### (Supplementary Note 11)

The UE according to Supplementary Note 10, wherein the at least one processor is configured to select a pair of an initial DL BWP having a best measured value of received power or received quality of the resource in the NCD-SSB and a corresponding initial UL BWP as the one initial DL BWP and the one initial UL BWP, respectively.

### (Supplementary Note 12)

The UE according to Supplementary Note 10, wherein the at least one processor is configured to select a pair of an initial DL BWP for which a measured value of received power or received quality of the resource in the NCD-SSB exceeds a threshold value and a corresponding initial UL BWP as the one initial DL BWP and the one initial UL BWP, respectively.

### (Supplementary Note 13)

The UE according to any one of Supplementary Notes 10 to 12, wherein the SIB1 contains configuration information for the plurality of NCD-SSBs.

### (Supplementary Note 14)

The UE according to any one of Supplementary Notes 1 to 13, wherein the particular type of UE is a Reduced Capability (RedCap) UE.

### (Supplementary Note 15)

A method performed by a User Equipment (UE), the method comprising:
receiving a System Information Block Type 1 (SIB1) containing configuration information for a plurality of initial downlink (DL) bandwidth parts (BWPs) and a plurality of initial uplink (UL) BWPs specific to a particular type of UE; and
selecting, from the plurality of initial DL BWPs and the plurality of initial UL BWPs, one initial DL BWP and one initial UL BWP to be used for random access.

### (Supplementary Note 16)

A program for causing a computer to perform a method for a User Equipment, the method comprising:
receiving a System Information Block Type 1 (SIB1) containing configuration information for a plurality of initial downlink (DL) bandwidth parts (BWPs) and a plurality of initial uplink (UL) BWPs specific to a particular type of UE; and
selecting, from the plurality of initial DL BWPs and the plurality of initial UL BWPs, one initial DL BWP and one initial UL BWP to be used for random access.

### (Supplementary Note 17)

A radio access network (RAN) node comprising:
at least one memory; and
at least one processor coupled to the at least one memory and configured to transmit a System Information Block Type 1 (SIB1) containing configuration information for a plurality of initial downlink (DL) bandwidth parts (BWPs) and a plurality of initial uplink (UL) BWPs specific to a particular type of User Equipment (UE).

### (Supplementary Note 18)

The RAN node according to Supplementary Note 17, wherein the configuration information causes the particular type of UE to select, from the plurality of initial DL BWPs and the plurality of initial UL BWPs, one initial DL BWP and one initial UL BWP to be used for random access.

### (Supplementary Note 19)

The RAN node according to Supplementary Note 18, wherein the configuration information causes the particular type of UE to randomly select the one initial DL BWP and the one initial UL BWP.

### (Supplementary Note 20)

The RAN node according to Supplementary Note 18, wherein the configuration information causes the particular type of UE to select the one initial DL BWP and the one initial UL BWP based on a UE identifier.

### (Supplementary Note 21)

The RAN node according to Supplementary Note 18, wherein the configuration information causes the particular type of UE to select the one initial DL BWP and the one initial UL BWP based on a group identifier assigned by a core network.

### (Supplementary Note 22)

The RAN node according to Supplementary Note 21, wherein the group identifier is a Paging Subgroup ID.

### (Supplementary Note 23)

The RAN node according to Supplementary Note 18, wherein the configuration information causes the particular type of UE to select the one initial DL BWP and the one initial UL BWP based on a measured value of received power or received quality of a downlink signal.

### (Supplementary Note 24)

The RAN node according to Supplementary Note 23, wherein
the measured value of the received power is a measured value of Reference Signal Received Power (RSRP) of a resource within a Cell Defining (CD) Synchronization Signal (SS)/Physical Broadcast Channel (PBCH) block (SSB), and
the measured value of the received quality is a measured value of Reference Signal Received Quality (RSRQ) of a resource within the CD-SSB.

### (Supplementary Note 25)

The RAN node according to Supplementary Note 24, wherein the configuration information causes the particular type of UE to:
if the measured value exceeds a first threshold value, select as the one initial DL BWP and the one initial UL BWP an initial DL BWP and an initial UL BWP that are closest to the CD-SSB in frequency domain, and
if the measured value is lower than a second threshold value that is equal to or lower than the first threshold value, select as the one initial DL BWP and the one initial UL BWP an initial DL BWP and an initial UL BWP that are furthest from the CD-SSB in frequency domain.

### (Supplementary Note 26)

The RAN node according to Supplementary Note 25, wherein
the second threshold value is lower than the first threshold value, and
the configuration information causes the particular type of UE to randomly select the one initial DL BWP and the one initial UL BWP if the measured value is between the first threshold value and the second threshold value.

### (Supplementary Note 27)

The RAN node according to Supplementary Note 18, wherein the configuration information causes the particular type of UE to:
measure received power or received quality on a resource within each of a plurality of Non-Cell Defining (NCD) Synchronization Signal (SS)/Physical Broadcast Channel (PBCH) blocks (SSBs), each of which is contained in a respective one of the plurality of initial DL BWPs; and
selecting the one initial DL BWP and the one initial UL BWP based on a comparison between the measured values of received power or received quality.

### (Supplementary Note 28)

The RAN node according to Supplementary Note 27, wherein the configuration information causes the particular type of UE to select a pair of an initial DL BWP having a best measured value of received power or received quality of the resource in the NCD-SSB and a corresponding initial UL BWP as the one initial DL BWP and the one initial UL BWP, respectively.

### (Supplementary Note 29)

The RAN node according to Supplementary Note 27, wherein the configuration information causes the particular type of UE to select a pair of an initial DL BWP for which a measured value of received power or received quality of the resource in the NCD-SSB exceeds a threshold value and a corresponding initial UL BWP as the one initial DL BWP and the one initial UL BWP, respectively.

### (Supplementary Note 30)

The RAN node according to any one of Supplementary Notes 27 to 29, wherein the SIB1 contains configuration information for the plurality of NCD-SSBs.

### (Supplementary Note 31)

The RAN node according to any one of Supplementary Notes 17 to 30, wherein the particular type of UE is a Reduced Capability (RedCap) UE.

### (Supplementary Note 32)

A method performed by a radio access network (RAN) node, the method comprising:
transmitting a System Information Block Type 1 (SIB1) containing configuration information for a plurality of initial downlink (DL) bandwidth parts (BWPs) and a plurality of initial uplink (UL) BWPs specific to a particular type of User Equipment (UE).

### (Supplementary Note 33)

A program for causing a computer to perform a method for a radio access network (RAN) node, the method comprising:
transmitting a System Information Block Type 1 (SIB1) containing configuration information for a plurality of initial downlink (DL) bandwidth parts (BWPs) and a plurality of initial uplink (UL) BWPs specific to a particular type of User Equipment (UE).

This application is based upon and claims the benefit of priority from Japanese Patent Application No. 2022-139336, filed on September 1, 2022, the disclosure of which is incorporated herein in its entirety by reference.

### Reference Signs List

- 1: RAN node
- 2: UE
- 804: Processor
- 805: Memory
- 806: Modules
- 903: Baseband processor
- 904: Application processor
- 906: Memory
- 907: Modules

## Claims

1. A User Equipment (UE) comprising:
at least one memory; and
at least one processor coupled to the at least one memory and configured to:
receive a System Information Block Type 1 (SIB1) containing configuration information for a plurality of initial downlink (DL) bandwidth parts (BWPs) and a plurality of initial uplink (UL) BWPs specific to a particular type of UE; and
select, from the plurality of initial DL BWPs and the plurality of initial UL BWPs, one initial DL BWP and one initial UL BWP to be used for random access.

2. The UE according to claim 1, wherein the at least one processor is configured to randomly select the one initial DL BWP and the one initial UL BWP.

3. The UE according to claim 1, wherein the at least one processor is configured to select the one initial DL BWP and the one initial UL BWP based on a UE identifier.

4. The UE according to claim 1, wherein the at least one processor is configured to select the one initial DL BWP and the one initial UL BWP based on a group identifier assigned by a core network.

5. The UE according to claim 4, wherein the group identifier is a Paging Subgroup ID.

6. The UE according to claim 1, wherein the at least one processor is configured to select the one initial DL BWP and the one initial UL BWP based on a measured value of received power or received quality of a downlink signal.

7. The UE according to claim 6, wherein
the measured value of the received power is a measured value of Reference Signal Received Power (RSRP) of a resource within a Cell Defining (CD) Synchronization Signal (SS)/Physical Broadcast Channel (PBCH) block (SSB), and
the measured value of the received quality is a measured value of Reference Signal Received Quality (RSRQ) of a resource within the CD-SSB.

8. The UE according to claim 7, wherein the at least one processor is configured to:
if the measured value exceeds a first threshold value, select as the one initial DL BWP and the one initial UL BWP an initial DL BWP and an initial UL BWP that are closest to the CD-SSB in frequency domain, and
if the measured value is lower than a second threshold value that is equal to or lower than the first threshold value, select as the one initial DL BWP and the one initial UL BWP an initial DL BWP and an initial UL BWP that are furthest from the CD-SSB in frequency domain.

9. The UE according to claim 8, wherein
the second threshold value is lower than the first threshold value, and
the at least one processor is configured to randomly select the one initial DL BWP and the one initial UL BWP if the measured value is between the first threshold value and the second threshold value.

10. The UE according to claim 1, wherein the at least one processor is configured to:
measure received power or received quality on a resource within each of a plurality of Non-Cell Defining (NCD) Synchronization Signal (SS)/Physical Broadcast Channel (PBCH) blocks (SSBs), each of which is contained in a respective one of the plurality of initial DL BWPs; and
selecting the one initial DL BWP and the one initial UL BWP based on a comparison between the measured values of received power or received quality.

11. The UE according to claim 10, wherein the at least one processor is configured to select a pair of an initial DL BWP having a best measured value of received power or received quality of the resource in the NCD-SSB and a corresponding initial UL BWP as the one initial DL BWP and the one initial UL BWP, respectively.

12. The UE according to claim 10, wherein the at least one processor is configured to select a pair of an initial DL BWP for which a measured value of received power or received quality of the resource in the NCD-SSB exceeds a threshold value and a corresponding initial UL BWP as the one initial DL BWP and the one initial UL BWP, respectively.

13. The UE according to any one of claims 10 to 12, wherein the SIB1 contains configuration information for the plurality of NCD-SSBs.

14. The UE according to any one of claims 1 to 13, wherein the particular type of UE is a Reduced Capability (RedCap) UE.

15. A method performed by a User Equipment (UE), the method comprising:
receiving a System Information Block Type 1 (SIB1) containing configuration information for a plurality of initial downlink (DL) bandwidth parts (BWPs) and a plurality of initial uplink (UL) BWPs specific to a particular type of UE; and
selecting, from the plurality of initial DL BWPs and the plurality of initial UL BWPs, one initial DL BWP and one initial UL BWP to be used for random access.

16. A program for causing a computer to perform a method for a User Equipment, the method comprising:
receiving a System Information Block Type 1 (SIB1) containing configuration information for a plurality of initial downlink (DL) bandwidth parts (BWPs) and a plurality of initial uplink (UL) BWPs specific to a particular type of UE; and
selecting, from the plurality of initial DL BWPs and the plurality of initial UL BWPs, one initial DL BWP and one initial UL BWP to be used for random access.

17. A radio access network (RAN) node comprising:
at least one memory; and
at least one processor coupled to the at least one memory and configured to transmit a System Information Block Type 1 (SIB1) containing configuration information for a plurality of initial downlink (DL) bandwidth parts (BWPs) and a plurality of initial uplink (UL) BWPs specific to a particular type of User Equipment (UE).

18. The RAN node according to claim 17, wherein the configuration information causes the particular type of UE to select, from the plurality of initial DL BWPs and the plurality of initial UL BWPs, one initial DL BWP and one initial UL BWP to be used for random access.

19. The RAN node according to claim 18, wherein the configuration information causes the particular type of UE to randomly select the one initial DL BWP and the one initial UL BWP.

20. The RAN node according to claim 18, wherein the configuration information causes the particular type of UE to select the one initial DL BWP and the one initial UL BWP based on a UE identifier.

21. The RAN node according to claim 18, wherein the configuration information causes the particular type of UE to select the one initial DL BWP and the one initial UL BWP based on a group identifier assigned by a core network.

22. The RAN node according to claim 21, wherein the group identifier is a Paging Subgroup ID.

23. The RAN node according to claim 18, wherein the configuration information causes the particular type of UE to select the one initial DL BWP and the one initial UL BWP based on a measured value of received power or received quality of a downlink signal.

24. The RAN node according to claim 23, wherein
the measured value of the received power is a measured value of Reference Signal Received Power (RSRP) of a resource within a Cell Defining (CD) Synchronization Signal (SS)/Physical Broadcast Channel (PBCH) block (SSB), and
the measured value of the received quality is a measured value of Reference Signal Received Quality (RSRQ) of a resource within the CD-SSB.

25. The RAN node according to claim 24, wherein the configuration information causes the particular type of UE to:
if the measured value exceeds a first threshold value, select as the one initial DL BWP and the one initial UL BWP an initial DL BWP and an initial UL BWP that are closest to the CD-SSB in frequency domain, and
if the measured value is lower than a second threshold value that is equal to or lower than the first threshold value, select as the one initial DL BWP and the one initial UL BWP an initial DL BWP and an initial UL BWP that are furthest from the CD-SSB in frequency domain.

26. The RAN node according to claim 25, wherein
the second threshold value is lower than the first threshold value, and
the configuration information causes the particular type of UE to randomly select the one initial DL BWP and the one initial UL BWP if the measured value is between the first threshold value and the second threshold value.

27. The RAN node according to claim 18, wherein the configuration information causes the particular type of UE to:
measure received power or received quality on a resource within each of a plurality of Non-Cell Defining (NCD) Synchronization Signal (SS)/Physical Broadcast Channel (PBCH) blocks (SSBs), each of which is contained in a respective one of the plurality of initial DL BWPs; and
selecting the one initial DL BWP and the one initial UL BWP based on a comparison between the measured values of received power or received quality.

28. The RAN node according to claim 27, wherein the configuration information causes the particular type of UE to select a pair of an initial DL BWP having a best measured value of received power or received quality of the resource in the NCD-SSB and a corresponding initial UL BWP as the one initial DL BWP and the one initial UL BWP, respectively.

29. The RAN node according to claim 27, wherein the configuration information causes the particular type of UE to select a pair of an initial DL BWP for which a measured value of received power or received quality of the resource in the NCD-SSB exceeds a threshold value and a corresponding initial UL BWP as the one initial DL BWP and the one initial UL BWP, respectively.

30. The RAN node according to any one of claims 27 to 29, wherein the SIB1 contains configuration information for the plurality of NCD-SSBs.

31. The RAN node according to any one of claims 17 to 30, wherein the particular type of UE is a Reduced Capability (RedCap) UE.

32. A method performed by a radio access network (RAN) node, the method comprising:
transmitting a System Information Block Type 1 (SIB1) containing configuration information for a plurality of initial downlink (DL) bandwidth parts (BWPs) and a plurality of initial uplink (UL) BWPs specific to a particular type of User Equipment (UE).

33. A program for causing a computer to perform a method for a radio access network (RAN) node, the method comprising:
transmitting a System Information Block Type 1 (SIB1) containing configuration information for a plurality of initial downlink (DL) bandwidth parts (BWPs) and a plurality of initial uplink (UL) BWPs specific to a particular type of User Equipment (UE).
